# EUROPÄISCHE PATENTSCHRIFT

(11) **EP 1 024 243 B1**
(45) Veröffentlichungstag und Bekanntmachung des Hinweises auf die Patenterteilung: **15.09.2004**
(21) Anmeldenummer: 99123108.5
(22) Anmeldetag: 18.11.1999
(51) Int. Cl.: E06B 3/26, E06B 5/16

(54) **Brandsichere Isolierstegverbindung**
Fireproof connection with isolating web
Connection resistante au feu avec âme isolante

(30) Priorität: 12.01.1999 DE 19900793
(43) Veröffentlichungstag der Anmeldung: 02.08.2000
(73) Patentinhaber: Schulz, Harald, Dr.-Ing., 86381 Krumbach (DE)
(72) Erfinder: Schulz, Harald, Dr.-Ing., 86381 Krumbach (DE)
(74) Vertreter: HOFFMANN - EITLE

(56) Entgegenhaltungen:
- DE-A- 3 438 861
- US-A- 5 727 356

## Beschreibung

### Technisches Gebiet

Die Erfindung betrifft eine brandsichere Isolierstegverbindung zwischen zwei Metallprofilen, insbesondere für Fassaden, Fenster und Türen.

Bei der Ausbildung von Rahmen im Bereich von Fenstern, Türen und Fassaden muß für eine möglichst geringe Wärmeleitung zwischen den nach außen und den nach innen gerichteten Bereichen eines Rahmens gesorgt werden. Dies wird dadurch gewährleistet, daß die aus Gründen der Festigkeit notwendigerweise verwendeten Metallprofile durch Kunststoffleisten miteinander verbunden werden, die entlang ihrer Längsränder derart verbreitet, beispielsweise mit einem Schwalbenschwanz, einem Hammerkopf oder ähnlichem, ausgestattet sind, daß sie in eine jeweilige Halterungskontur eines Metallprofils einschiebbar sind und in einer Richtung senkrecht zu ihrer Längserstreckung in der Halterungskontur verankert sind.

Für derartige Rahmenanordnungen sind Brandschutzanforderungen zu beachten. Insbesondere ist zu gewährleisten, daß sich in einem Brandfall, wenn der Kunststoff des Isolierstegs in Folge der Wärmeentwicklung zu einem bestimmten Zeitpunkt versagt, die durch das Kunststoffprofil gehaltenen Metallprofile nicht voneinander lösen können.

### Stand der Technik

Aus der DE 44 43 762 A1 ist eine mehrteilige Isolierleiste, die zwischen zwei Metallprofilen eingesetzt ist, zur Erfüllung der genannten Anforderungen bekannt. Hierbei ist die Kunststoffleiste entlang der Längsränder, also in den verbreiterten Bereichen, abschnittsweise ausgespart. In diese Aussparungen sind entsprechende Abschnitte einer die Kunststoffleiste überbrückenden Metallleiste eingesetzt. Im Brandfall übernimmt nach dem Versagen der Kunststoffbereiche die überbrückende Metallleiste die Halterungsfunktion. Um dennoch die Wärmeleitung zwischen den innen und außen angeordneten Metallprofilen zu minimieren, wird die Metallleiste aus einem Material mit verringerter Wärmeleitfähigkeit ausgebildet.

Ferner sind in der Technik Glasfaserarmierungen bekannt, die in eine in der beschriebenen Weise gestaltete Wärmedämmleiste aus Kunststoff eingearbeitet sind. Derartige Glasfaserarmierungen sind jedoch zum einen teuer, zum anderen entstehen bei dieser Ausbildung einer Kunststoffdämmleiste Probleme hinsichtlich der Bearbeitbarkeit durch spannende Verfahren. Die verwendeten Werkzeuge verschleißen aufgrund der widerstandsfähigen Glasfaserarmierungen so schnell, dass die Wirtschaftlichkeit der Herstellung einer derartigen Wärmedämmleistung aus Kunststoff erheblich herabgesetzt wird.

Die DE 34 38 861 A1 beschreibt ein Verbundprofil mit Dämmleisten zwischen Metallprofilen sowie brandsicheren Überbrückungsgliedern, die als getrennte Bauteile vorgesehen sind und separat in getrennte Aufnahmeräume der Metallprofile eingeschoben werden. Im Brandfall werden nach dem Versagen der Dämmleisten die Metallhalbprofile durch das Überbrückungsglied zusammengehalten. Die DE 34 38 861 A1 stellt den nächstkommenden Stand der Technik dar.

### Darstellung der Erfindung

Der Erfindung liegt die Aufgabe zugrunde, eine brandsichere Isolierstegverbindung zur Anbringung zwischen zwei Metallprofilen vorzuschlagen, welche die Montage eines Verbundprofils vereinfacht und gleichzeitig die Möglichkeit gibt, die Wärmedämmung zu erhöhen.

Die Lösung dieser Aufgabe erfolgt durch die im Anspruch 1 beschriebene brandsichere Isolierstegverbindung.

Der Erfindung liegt der Gedanke zugrunde, die Dämmleiste geringer Wärmeleitfähigkeit weitestgehend von dem hitzebeständigen Zusatzelement, das im Brandfall die Haltefunktion übernimmt, zu trennen. Das Zusatzelement ist zwar mit der Dämmleiste verbunden, rückt aber in dem Einbauzustand im Profil in unterschiedliche Aufnahmeräume der Metallprofile ein.

Diese brandsichere Isolierstegverbindung ist mit geringem Aufwand zu fertigen, da die beiden Einzelbestandteile jeweils unabhängig voneinander gefertigt werden können und nur abschließend miteinander verbunden werden. Die Isolierstegverbindung kann als komplett vorgefertigtes Halbzeug weiterverarbeitet werden.

Das Herstellen eines komplexen Verbundelementes, beispielsweise mit Metalleinlagen, die mit Kunststoff umspritzt sind, entfällt hierdurch. Ein weiterer Vorteil der brandsicheren Isolierstegverbindung liegt darin, daß die Dämmleiste nachrüstbar ausgestaltet ist. Da in der Regel nicht jede einzelne Dämmleiste mit dem Zusatzelement ausgestattet sein muß, sondern die Zusatzelemente nur an ausgewählten Positionen angeordnet sind, um die erforderlichen Mindesthaltefunktionen erfüllen zu können, lassen sich somit nur einige der Dämmleisten mit einem Zusatzelement nachrüsten, ohne daß es der Fertigung spezieller Dämmleisten bedarf. Normalerweise ist die Dämmleiste aber bereits mit dem Zusatzelement vormontiert.

Bevorzugte Ausführungsformen sind durch die übrigen Ansprüche gekennzeichnet.

Nach einer bevorzugten Ausführungsform besteht das hitzebeständige Zusatzelement aus Metall, insbesondere Stahl, Edelstahl oder Aluminium, oder aber aus Keramik, Glas oder hitzebeständigem Kunststoff. Unabhängig von der Verarbeitbarkeit und auch Bearbeitbarkeit eines Verbundprofiles kann somit das Zusatzelement aus einem derjenigen Materialien gebildet sein, welche die erforderlichen Nothalteeigenschaften besitzt.

Vorzugsweise weist das hitzebeständige Zusatzelement Ausstanzungen auf. Durch diese Maßnahme wird der Wärmestrom zwischen Innenprofil und Außenprofil verringert und durch eine geeignete Geometrie der Ausstanzungen läßt sich zudem ein Labyrintheffekt erzielen, d.h. die Länge des der Wärmeleitung zur Verfügung stehenden Zusatzelementes wird hierdurch virtuell erhöht und der unerwünschte Verlustwärmestrom zwischen Außen- und Innenprofil weiter verringert.

Nach einer bevorzugten Ausführungsform liegt im Einbauzustand keine unmittelbare Berührung zwischen dem hitzebeständigen Zusatzelement und den Metallprofilen vor. Durch die Befestigung des hitzebeständigen Zusatzelements an der Dämmleiste ist die Lage des Zusatzelementes relativ zum Innenprofil und Außenprofil im Einbauzustand genau definiert. Daher ist es möglich, das Zusatzelement so auszubilden, daß es sich in Aufnahmeräume der Metallprofile erstreckt, jedoch nicht in einen leitenden Kontakt mit den Metallprofilen tritt. Dies eröffnet die Möglichkeit, im Normalfall (d.h. ohne das Vorliegen eines Brandfalles) eine weitgehend unveränderte Wärmedämmung trotz des Vorsehens des hitzebeständigen Zusatzelementes zu gewährleisten.

Nach einer alternativen bevorzugten Ausführungsform wird das hitzebeständige Zusatzelement im Einbauzustand mit mindestens einem der Metallprofile verschweißt. Diese Gestaltung bietet sich beispielsweise im Falle von gewalzten Stahlprofilen an, bei denen das Gestalten von Aufnahmeräumen der Metallprofile mit einer komplexen Geometrie mit erheblichen fertigungstechnischen Schwierigkeiten verbunden ist.

Nach einer bevorzugten Ausführungsform ist das hitzebeständige Zusatzelement mit der Dämmleiste verklebt. Hierdurch läßt sich eine bezüglich der Fertigung sehr einfache Verbindung herstellen.

Nach einer alternativen Ausführungsform ist das hitzebeständige Zusatzelement in die Dämmleiste eingeschmolzen. Der Verbund zwischen der Dämmleiste und dem Zusatzelement wird somit nicht erst nach der individuellen Fertigung der Dämmleisten durchgeführt, sondern bereits in den Fertigungsprozeß der Dämmleisten integriert. Auch dies stellt eine einfache Alternative dar, um zu einer nicht lösbaren Verbindung zwischen der Dämmleiste und dem Zusatzelement zu gelangen.

Nach einer weiteren alternativen Ausführungsform ist das hitzebeständige Zusatzelement in die Dämmleiste eingeschoben. Diese Verbindungsalternative bietet sich immer dann an, wenn die Verbindung zwischen Dämmleiste und Zusatzelement lösbar ausgeführt sein soll.

Alternativ ist das hitzebeständige Zusatzelement in die Dämmleiste eingeklipst. Auch dies stellt eine lösbare Verbindung zwischen Zusatzelement und Dämmleiste dar; der Unterschied zum Einschieben des Zusatzelementes in die Dämmleiste liegt jedoch darin, daß auf eine sehr einfache Weise gezielt längs der Längserstreckung der Dämmleiste nur an einigen ausgewählten Stellen schmale Zusatzelemente eingeklipst werden können. Unter Einklipsen versteht man ein Verbinden der Dämmleiste und eines Zusatzelementes, wobei die Bewegungsrichtung senkrecht zur Längserstreckung der Dämmleiste verläuft, während beim Einschieben eine Relativbewegung zwischen Dämmleiste und Zusatzelemente parallel zur Längserstreckung der Dämmleiste erfolgt.

### Kurze Beschreibung der Zeichnungen

Nachfolgend werden einige beispielhaft in den Zeichnungen dargestellte Ausführungsformen der Erfindung näher erläutert. Es zeigen:
- Fig. 1: ein Beispiel einer Isolierstegverbindung zwischen zwei Metallprofilen;
- Fig. 2: eine schematische Schnittansicht der Anbringung einer brandsicheren Isolierstegverbindung zwischen zwei Metallprofilen;
- Fig. 3: eine schematische Schnittansicht einer brandsicheren Isolierstegverbindung mit einem in die Dämmleiste eingeschobenen Zusatzelement;
- Fig. 4: eine Schnittansicht einer brandsicheren Isolierstegverbindung mit einem in die Dämmleiste eingeklipsten Zusatzelement;
- Fig. 5: eine Schnittansicht durch eine brandsichere Isolierstegverbindung mit einem Zusatzelement, das in die Dämmleiste eingeschmolzen ist;
- Fig. 6: eine schematische Detaillansicht im Schnitt, welche eine Befestigungsalternative des Zusatzelementes in einem Aufnahmeraum des Metallprofiles zeigt;
- Fig. 7: eine Ansicht entsprechend Fig. 6 mit einer alternativen Formgebung des Zusatzelements sowie des Aufnahmeraums des Metallprofiles;
- Fig. 8: eine Ansicht entsprechend Fig. 6 mit einer weiteren alternativen Gestaltung des Zusatzelements sowie des entsprechenden Aufnahmeraums im Metallprofil;
- Fig. 9: eine alternative Befestigungsvariante des Zusatzelements am Metallprofil;
- Fig. 10: die Ausbildung des Zusatzelements mit Aussparungen;
- Fig. 11 bis 13: unterschiedliche Geometrien der Aussparungen im Zusatzelement;
- Fig. 14: eine alternative Ausführungsform einer Isolierstegverbindung zwischen zwei Metallprofilen;
- Fig. 15: den Ausschnitt A in Fig. 14; und
- Fig. 16: eine alternative Gestaltung des Zusatzelements in einer Darstellung gemäß Fig. 15.

### Wege zur Ausführung der Erfindung

In den nachfolgenden Figuren werden jeweils entsprechende Bauelemente mit denselben Referenzziffern bezeichnet.

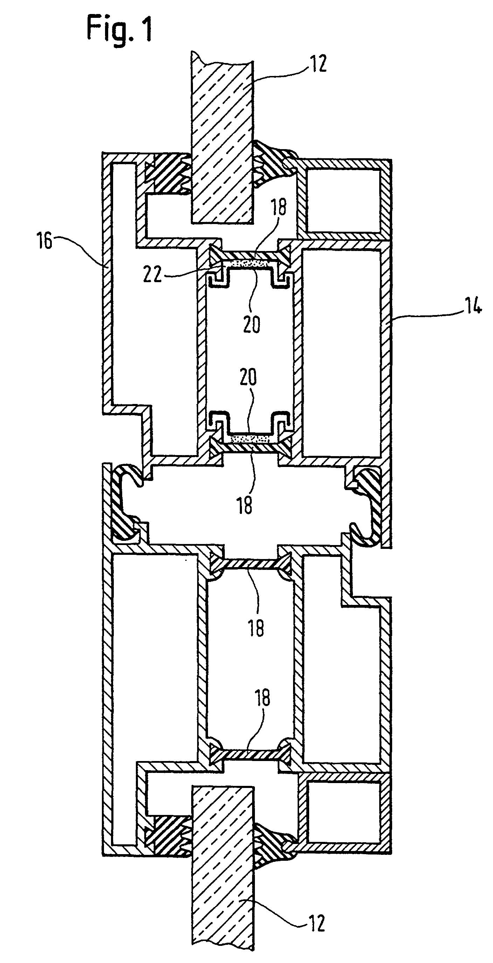

In Fig. 1 ist ganz allgemein ein Profil dargestellt, dessen genaue Ausbildung und Funktion für das Verständnis der Erfindung nicht wesentlich ist. Wie allerdings aus der Orientierung der Fassadenplatten 12, z.B. Glasscheiben, deutlich wird, besteht der in Fig. 1 dargestellte Metallrahmen aus zwei Rahmenhälften 14, 16, die jeweils zur Innenseite des Gebäudes und Außenseite des Gebäudes oder eines Raumes gerichtet sind. Zwischen den Metallprofilen 14 und 16 sind Wärmedämmleisten 18 angeordnet, die in einer formschlüssigen Weise in entsprechend geformte Aufnahmenuten der Profile 14, 16 eingeschoben sind.

Die Dämmleisten besitzen eine geringe Wärmeleitfähigkeit, so daß sich bei Temperaturunterschieden zwischen den Metallprofilen 14, 16 keine Wärmebrücken zwischen den Profilen bilden. Hierzu ist die Dämmleiste aus einem geeigneten Material mit geringer Wärmeleitfähigkeit gebildet, beispielsweise aus PVC, PP, ABS, PA, PU-Gießharz. Allerdings besitzt die Ausbildung der Dämmleiste aus Kunststoff den Nachteil, daß im Brandfall die Dämmleisten rasch versagt und somit keine sichere Verbindung zwischen den Profilen 14 und 16 mehr gewährleistet ist.

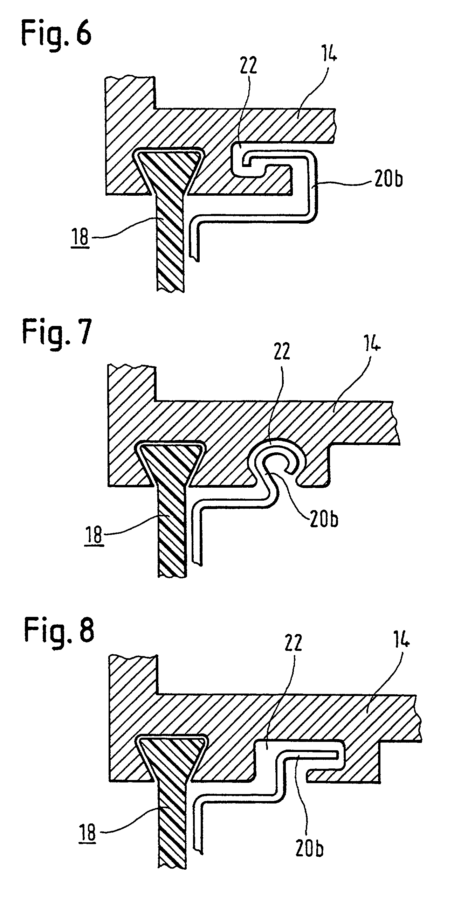

Aus diesem Grund können alle oder aber auch nur einige der Dämmleisten 18 mit einem Zusatzelement 20 ausgestattet sein, das hitzebeständig ist und mit der Dämmleiste verbunden ist. Weiterhin erstreckt sich das hitzebeständige Zusatzelement in dem in Fig. 1 dargestellten Einbauzustand in Aufnahmeräume 22 der Metallprofile, die, wie später anhand der Fig. 6 bis 8 genauer erläutert werden wird, verschiedene geeignete Geometrien besitzen können.

Im Brandfall erfüllen somit die hitzebeständigen Zusatzelemente 20 nach dem Versagen der Wärmedämmleisten 18 eine Haltefunktion zwischen den Profilen 14 und 16.

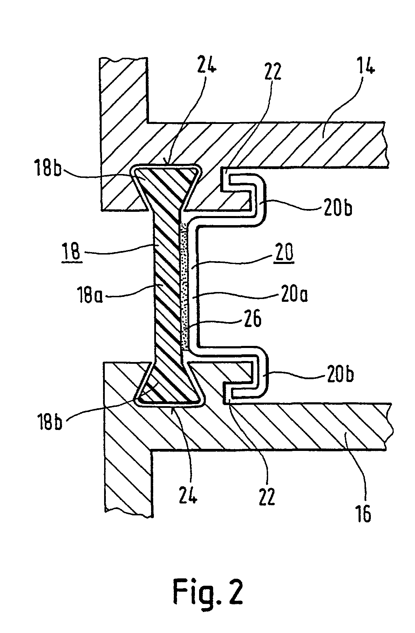

Die Ausgestaltung der brandsicheren Isolierstegverbindung nach einer ersten Ausführungsform ist aus der Fig. 2 ersichtlich. Hierin sind die beiden Metallprofile 14, 16 dargestellt, zwischen denen sich die Isolierstegverbindung befindet. Die Dämmleiste 18, die als Isoliersteg aus Kunststoff ausgebildet ist, besteht aus einem leistenförmigen Mittelteil 18a sowie Verankerungsbereichen 18b, die einstückig mit dem Mittelteil 18a ausgebildet sind. Die Verankerungsbereiche 18b weiten sich in der Querschnittsdarstellung in Fig. 2 in Richtung auf die zu den Profilen 14 und 16 weisenden Enden auf, so daß eine formschlüssige Verankerung der Dämmleiste 18 in entsprechend geformten Aufnahmenuten 24 der Profile 14 und 16 möglich ist.

Die Dämmleiste 18 besitzt eine geringe Wärmeleitfähigkeit und ist vorzugsweise aus Kunststoff, insbesondere PVC, PP, ABS, PA, PU-Gießharz etc..

Wie aus Fig. 2 ersichtlich ist, ist neben der Dämmleiste 18 und in Kontakt zu dieser das Zusatzelement 20 angeordnet. Das Zusatzelement 20 weist einen Mittelteil 20a sowie Verankerungselemente 20b auf, die vorzugsweise einstückig mit dem Mittelteil 20a ausgebildet sind.

Das Zusatzelement 20 ist mit der Dämmleiste 18 verbunden, indem die jeweiligen Mittelteile 18a und 20a entweder dauerhaft oder lösbar miteinander verbunden werden. Verschiedene mögliche Ausführungen für die Verbindung zwischen der Dämmleiste und dem Zusatzelement sind in den nachfolgenden Figuren beschrieben. Im vorliegenden Fall ist eine Klebeverbindung 26 zwischen den Mittelteilen 18a der Dämmleiste sowie 20a des Zusatzelementes ausgebildet. Somit kann die brandsichere Isolierstegverbindung bestehend aus der Dämmleiste 18 und mindestens einem mit dieser verklebten Zusatzelement bei der Montage in einem Arbeitsgang zwischen die Profile 14 und 16 eingeschoben werden.

Aus der Schnittdarstellung in Fig. 2 ist nicht ersichtlich, ob sich die Dämmleiste 18 sowie das Zusatzelement 20 jeweils über dieselbe Länge senkrecht zur Zeichenebene in Fig. 2 erstrecken. Hierbei sind sowohl bei der Ausführungsform nach Fig. 2 wie auch nach den nachfolgend beschriebenen Alternativen verschiedene Lösungen denkbar. So kann das Zusatzelement 20 dieselbe Länge wie die Dämmleiste 18 aufweisen oder aber es können an einer Dämmleiste 18 in Abständen zueinander mehrere Zusatzelemente mit einer geringen Länge, d.h. Erstreckung senkrecht zur Zeichenebene in Fig. 2, verbunden sein.

Wie aus Fig. 2 weiterhin ersichtlich ist, erstrecken sich die Verankerungselemente 20b des Zusatzelements 20 jeweils in Aufnahmeräume 22, die in den Profilen 14 und 16 gebildet sind.

Wie aus Fig. 2 ersichtlich ist, ist das Zusatzelement 20 so an der Dämmleiste 18 befestigt, daß die jeweiligen Verankerungselemente 20b sich zwar in die Aufnahmeräume 22 der Profile 12 und 16 hineinerstrecken, jedoch nicht mit den Wandungen der Aufnahmeräume in Kontakt stehen. Hierdurch wird eine direkte Wärmeleitung zwischen den Profilen 14 bzw. 16 und dem Zusatzelement 20 vermieden. Diese optionale Ausbildung ist insbesondere dann von Interesse, wenn das Zusatzelement aus Metall gefertigt ist und somit gegenüber den Dämmleisten eine höhere Wärmeleitfähigkeit besitzt.

Als Werkstoffe für das Zusatzelement kommen Metall, beispielsweise Aluminium, Stahl, Edelstahl, aber auch Keramik oder Glas in Frage. Ebenso könnte ein hitzebeständiger Kunststoff, wie beispielsweise Polyamid, PTFE, Polysulfonäther, ggf. mit einer zusätzlichen Metallarmierung zur Verwendung gelangen.

Wenn das Zusatzelement aus einem der oben genannten Werkstoffe mit einer relativ geringen Wärmeleitfähigkeit ausgebildet ist und zudem der direkte Kontakt zwischen dem Zusatzelement und den Profilen 14 und 16 vermieden wird, wird bei der dargestellten Isolierstegverbindung sowohl der gewünschte Effekt eines möglichst geringen Wärmetransports zwischen den Profilen 14 und 16 erreicht, gleichzeitig aber wird auch dem Erfordernis einer festen Verbindung im Brandfalle genügt. Wenn im Brandfall der Kunststoff der Dämmleiste versagt und die Dämmleiste schmilzt, verbleibt das Zusatzelement zwischen den Aufnahmeräumen 22 der Profile 14 und 16 angeordnet und erfüllt somit die gewünschten Nothalteeigenschaften.

Allgemein soll der Wärmestrom über das Zusatzelement so gering wie möglich gehalten werden. Der Wärmestrom sollte so gering sein, daß die Normanforderungen der Brandschutzversuche, z.B. nach DIN 4102, erfüllt werden. Daher werden eine oder mehrere der folgenden Maßnahmen ergriffen: die Zusatzelemente werden so dünn wie zulässig ausgeführt, sie werden nur abschnittsweise entlang der Länge der Dämmleisten angebracht und es werden Ausstanzungen in den Zusatzelementen vorgenommen, um durch den oben beschriebenen Labyrintheffekt die Wärmeleitung weiter zu verringern. Zuletzt wird ein Material mit einer möglichst geringen Wärmeleitfähigkeit verwendet. Weiterhin können die Aufnahmeräume so angeordnet sein, daß der Wärmestrom über das hitzebeständige Zusatzelement aufgrund einer erhöhten zurückzulegenden Wegstrecke verringert wird.

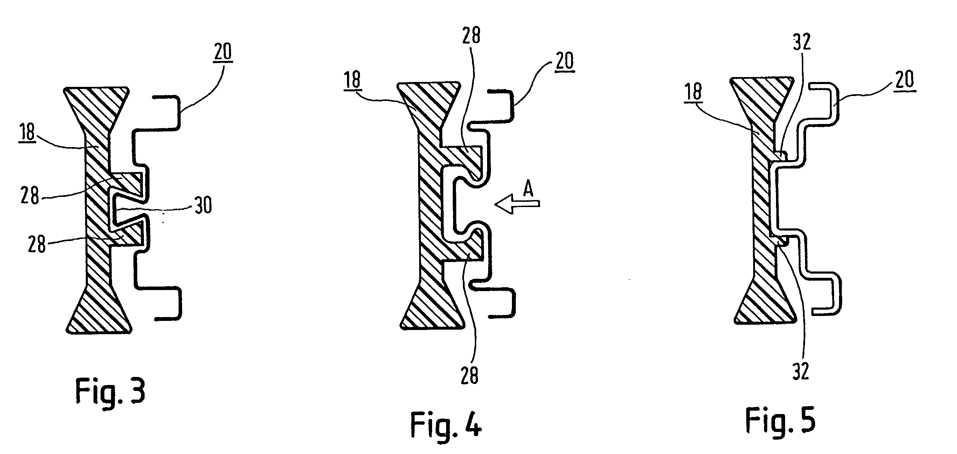

In den Fig. 3 bis 5 sind alternative Ausführungsformen der brandsicheren Isolierstegverbindung dargestellt, bei denen jeweils unterschiedliche Verbindungen zwischen der Dämmleiste 18 und dem Zusatzelement 20 dargestellt sind.

Die Dämmleiste nach Fig. 3 ist mit zwei Fixieransätzen 28 im Mittelteil ausgebildet, die entweder über der gesamten Länge der Dämmleiste 18 oder aber auch nur abschnittsweise über ihrer Länge angeordnet sein können. Zwischen den Fixieransätzen 28 ist, wie in Fig. 3 ersichtlich ist, eine Aufnahmerinne ausgebildet, welche die formschlüssige Aufnahme des Zusatzelements 20 gestattet. Das Zusatzelement 20 besitzt eine Ausformung 30, die in die zwischen den Fixieransätzen begrenzte Aufnahmerinne eingreift. Wie aus der Ansicht in Fig. 3 ersichtlich ist, läßt sich das Zusatzelement 20 nur in die Dämmleiste 18 einschieben, indem das Zusatzelement 20 senkrecht zur Zeichenebene in Fig. 3, d.h. in Längsrichtung der Dämmleiste verschoben wird.

In Fig. 4 ist eine alternative Ausführungsform dargestellt, bei der die Dämmleiste 18 ähnlich ausgebildet ist wie die Dämmleiste 18 in der Ausführungsform nach Fig. 3. Der wesentliche Unterschied zu der in Fig. 3 dargestellten Verbindung liegt darin, daß bei der Ausführungsform gemäß Fig. 4 das Zusatzelement 20 in die Dämmleiste 18 eingeklipst wird. Hierunter wird ein Einsetzen des Zusatzelements 20 in Pfeilrichtung A in die Dämmleiste 18 verstanden, wobei das Zusatzelement 20 so ausgebildet ist, daß sich dieses beim Eindrücken in die Dämmleiste verformt und anschließend in den zwischen den Fixieransätzen 28 gebildeten Raum wieder zurückfedert.

Fig. 5 zeigt eine weitere alternative Ausführungsform, bei der die Verbindung zwischen der Dämmleiste 18 und dem Zusatzelement 20 ausgeführt wird, indem das Zusatzelement in die Dämmleiste 18 eingeschmolzen wird. Hierbei wird vor dem Erhärten der extrudierten oder gegossenen Dämmleiste in diese ein Zusatzelement 20 oder aber über die Länge der Dämmleiste 18 verteilt mehrere Zusatzelemente heiß eingelegt und mit Druck gehalten, bis eine feste Verbindung zwischen dem Zusatzelement und der Dämmleiste hergestellt wurde. Zur Fixierung des Zusatzelementes auf der Dämmleiste dienen zusätzliche Zentrierstege 32, so daß nach der Fertigung der kombinierten brandsicheren Isolierstegverbindung das Einrücken der Verankerungselemente der Zusatzelemente in entsprechende Aufnahmeräume der Profile ohne einen direkten Kontakt und somit eine direkte wärmeleitende Verbindung sichergestellt ist.

Alternativ zu den in den Fig. 3 bis 5 dargestellten Befestigungsvarianten kann das Zusatzelement mit der Dämmleiste verschraubt oder vernietet sein.

In den Fig. 6 bis 8 sind schematisch alternative Ausbildungen der Aufnahmeräume 22 an den Profilen sowie die korrespondierend gestaltete Ausbildung der Verankerungselemente 20b der Zusatzelemente dargestellt. Die verschiedenen Anordnungen in den Fig. 6 bis 8 sind daraufhin ausgewählt, um nach Möglichkeit ein Lösen des Eingriffs zwischen dem Zusatzelement und dem Profil zu verhindern. Im Brandfall ist davon auszugehen, daß die Dämmleiste selbst keine Fixierung des Zusatzelementes mehr bewirkt, so daß das Zusatzelement alleine eine sichere Verbindung zwischen den Metallprofilen herstellen muß. Aus diesem Grund können verschieden geformte Aufnahmeräume 22 gebildet sein, die entweder durch ihre spezielle Formgebung nur das Einschieben der Zusatzelemente in Längsrichtung, d.h. senkrecht zur Zeichenebene der Fig. 6 bis 8 gestatten, oder aber Hinterschneidungen aufweisen, welche das Ausrücken der Zusatzelemente 20 aus den Aufnahmeräumen 22 zumindest deutlich erschweren.

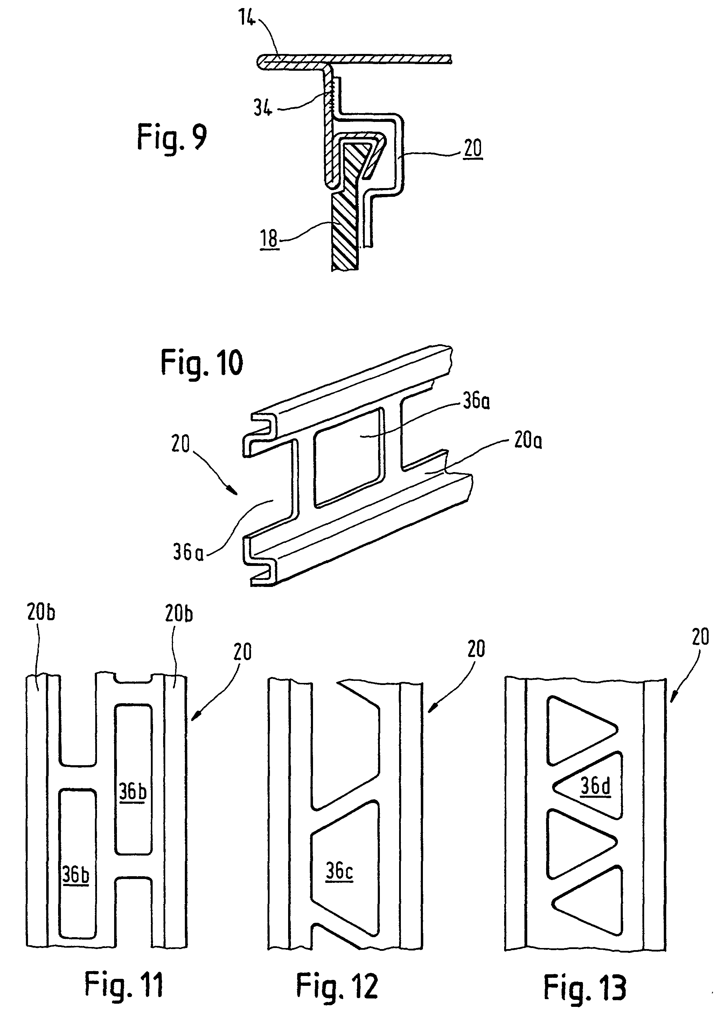

Die in den Fig. 6 bis 8 dargestellten Geometrien der Aufnahmeräume lassen sich insbesondere bei Aluminiumprofilen ausführen, bei denen stranggepreßte Profile mit komplexer Formgebung möglich sind. Im Falle von Stahlprofilen sind derartig komplex geformte Aufnahmeräume 22 jedoch nicht oder nur mit erheblichen Schwierigkeiten technisch umsetzbar. Daher zeigt Fig. 9 eine spezielle Ausführungsform, die insbesondere für die Verbindung von rollgeformten Stahlprofilen bevorzugt ist. Die Dämmleiste wird hierbei in einer gewohnten Weise in Aufnahmenuten des Profils 12 sowie des in Fig. 9 nicht dargestellten, korrespondierenden Profils 14 eingeschoben. Allerdings wird zwischen dem Zusatzelement 20 und dem Profil 14 eine leitende Verbindung hergestellt, indem das Zusatzelement 20 über eine Schweißverbindung 34, im allgemeinen nur punktweise bzw. einmal pro stückweisem Element, mit dem Profil 12 verbunden wird.

In den Fig. 10 bis 13 sind verschiedene Varianten dargestellt, die jeweils verdeutlichen, auf welche Weise Aussparungen 36 in den Zusatzelementen 20 vorgesehen sein können. Das Vorsehen von Aussparungen in Form von Ausstanzungen wird vorzugsweise beim Einsatz von Zusatzelementen aus Metall gewählt, weil aufgrund der relativ hohen Wärmeleitfähigkeit von Metall das Vorsehen von Ausstanzungen eine sehr positive Wirkung zeigt.

In Fig. 10 ist ein Ausschnitt eines Zusatzelements 20 in einer dreidimensionalen Darstellung gezeigt. Die Ausbildung der Verankerungselemente soll jedoch rein beispielhaft verstanden werden, da es bei der Darstellung in Fig. 10 lediglich darauf ankommt, daß im Mittelteil 20a des Zusatzelements rechteckige Ausstanzungen 36a vorgesehen sind. Diese Ausstanzungen verringern im Mittelteil die zur Wärmeleitung zur Verfügung stehende Querschnittsfläche des Mittelteils und verringern somit den Wärmestrom, der durch Wärmeleitung über das Zusatzelement 20 geführt wird.

Für die Verringerung des Wärmestromes sind im wesentlichen zwei Faktoren ausschlaggebend. Zum einen ist es vorteilhaft, die zur Verfügung stehende Querschnittsfläche des Materials möglichst gering zu halten, zum anderen kann auch die Wegstrecke verlängert werden, längs derer die Wärmeleitung von einem Verankerungselement 20b zum gegenüberliegenden Verankerungselement 20b erfolgt ist. Die in den Fig. 11, 12 und 13 dargestellten Ausführungsformen geben somit besonders bevorzugte Varianten für die geometrische Anordnung und Ausbildung von Ausstanzungen an, da neben der Verringerung der zur Wärmeleitung zur Verfügung stehenden Querschnittsfläche hier auch die zurückzulegende Wegstrecke erhöht wurde.

Dies wird bei der Ausführungsform gemäß Fig. 11 durch das Anordnen von Ausstanzungen 36b in zwei Reihen senkrecht zur Wärmestromrichtung bewirkt, wobei die Ausstanzungen jeweils zueinander versetzt angeordnet sind. Eine andere Möglichkeit besteht darin, trapezförmige Ausstanzungen 36c (siehe Fig. 12) oder aber im wesentlichen dreieckige Ausstanzungen 36d (siehe Fig. 13) vorzusehen, wobei diese so angeordnet werden, daß die zwischen benachbarten Ausstanzungen verbleibenden Stege, welche der Wärmeleitung dienen, in einem Winkel zur Senkrechten zur Längserstreckung der Zusatzelemente verlaufen.

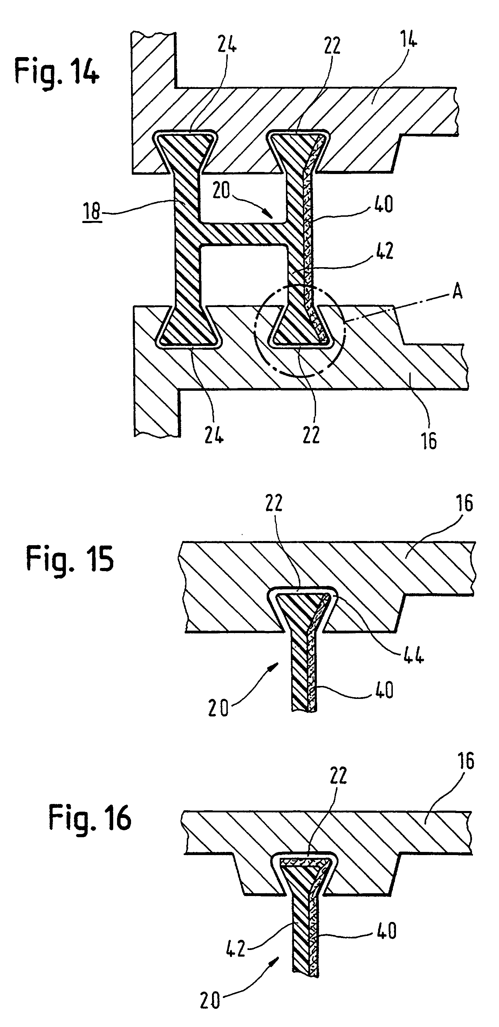

Fig. 14 zeigt eine alternative Ausführungsform der brandsicheren Isolierstegverbindung mit einer Dämmleiste 18, wie sie bereits in den vorhergegangenen Ausführungsformen dargestellt wurde. Die Dämmleistung 18 ist aus einem Material mit geringer Wärmeleitfähigkeit hergestellt und ist formschlüssig in die Befestigungsnuten 24 einsetzbar. Das hitzebeständige Zusatzelement ist ein Verbundwerkstück, das aus einem hitzebeständigen Bauteil 40 und einem wärmeisolierend ausgestalteten Bauteil 42 besteht. Das hitzebeständige Bauteil 40 ist durchgehend, d.h. über die gesamte Länge der Dämmleiste 18, oder aber nur abschnittsweise an dem wärmeisolierendem Bauteil 42 angebracht. Das wärmeisolierende Bauteil 42 ist fest an der Dämmleiste 18 angebracht und kann einstückig mit dieser extrudiert werden. Das Zusatzelement 20 ist somit als "Nebenprofil" zur Dämmleiste ausgebildet und erstreckt sich in Aufnahmeräume 22, die von den Befestigungsnuten 24 getrennt in den Metallprofilen 14 und 16 ausgebildet sind. Das Zusatzelement 20 besitzt im Normalfall keine Funktion, da im Normalfall nur eine möglichst geringe Wärmeübertragung stattfinden soll.

Um dies zu gewährleisten, kann sich das Zusatzelement, wie in Fig. 15 gezeigt, in die Aufnahmeräume 22 erstrecken. Wie aus der schematischen Darstellung in Fig. 15 ersichtlich ist, ist zwischen dem schwalbenschwanzartig aufgeweiteten Fuß des Zusatzelements und dem Aufnahmeraum 22 im Metallprofil 16 ein Luftspalt 44 vorhanden. Dies bedeutet, daß das gesamte Zusatzelement, d.h. der aus dem hitzebeständigen Bauteil 40 und dem wärmeisolierenden Bauteil 42 bestehende Verbund, im Normalfall nicht die Wandungen des Aufnahmeraums 22 im Metallprofil berührt. Hierdurch wird eine möglichst geringe Wärmeübertragung sichergestellt und die Bearbeitung des Gesamtprofils kann aufgrund der hohen gestatteten Fertigungstoleranzen sehr kostengünstig erfolgen. Im Brandfall versagen die Dämmleiste 18 sowie das wärmeisolierende Bauteil 42 und die Metallprofile 14 und 16 werden durch das hitzebeständige Bauteil 40 zusammengehalten. Darüber hinaus findet zwischen den zwei Metallprofilen 14 und 16 auch im Brandfall nur eine geringe Wärmeübertragung statt.

Um das sichere Verbinden der beiden Metallprofile 14 und 16 im Brandfall zu gewährleisten, kann nach einer besonders bevorzugten Ausführungsform das hitzebeständige Bauteil 40 wie in Fig. 16 dargestellt ausgebildet werden und das wärmeisolierende Bauteil 42 stirnseitig umschließen, so daß nach dem Versagen, d.h. Schmelzen des wärmeisolierenden Bauteils 42, eine feste Verankerung des hitzebeständigen Bauteils 40 in den Aufnahmeräumen 22 der Profile sichergestellt ist.

Die in den Fig. 14 bis 16 dargestellte Ausführungsform besitzt den Vorteil, daß das Nebenprofil mit dem über der gesamten Länge oder auch nur abschnittsweise daran befestigten Zusatzelement gemeinsam mit der Herstellung des Gesamtverbundes bereits eingebracht werden kann. Es ist somit kein zusätzlicher Arbeitsgang erforderlich. Darüber hinaus muß das Zusatzelement nur lose eingeschoben werden, da keine sichere Verankerung in den Aufnahmeräumen nötig ist und eine sichere Anlage des hitzebeständigen Bauteils 40 in den Aufnahmeräumen 22 sogar unerwünscht ist. Hierdurch bestehen keine Anforderungen an die Verbundwirkung und Toleranz des Bauteils.

Durch das Vorsehen einer brandsicheren Isolierstegverbindung mit einer Dämmleiste sowie mindestens einem getrennt hiervon vorzusehenden hitzebeständigen Zusatzelement, das mit der Dämmleiste verbunden ist, lassen sich nicht nur fertigungstechnisch, sondern auch wärmetechnisch deutliche Vorteile erzielen. Wie oben dargelegt wurde, lassen sich mehrere Lösungsalternativen entwickeln, die jeweils darauf abzielen, den Erfordernissen der Brandsicherheit zu genügen und im normalen Betrieb den Wärmestrom zwischen den Metallprofilen, welche durch die brandsichere Isolierstegverbindung verbunden werden, möglichst gering zu halten.

## Patentansprüche

1. Brandsichere Isolierstegverbindung zur Anbringung zwischen zwei Metallprofilen (14, 16), insbesondere für Fassaden, Fenster und Türen, mit
- einer Dämmleiste (18) mit geringer Wärmeleitfähigkeit, die formschlüssig in Befestigungsnuten (24) der zwei Metallprofile (12, 14) einsetzbar ist; und
- mindestens einem hitzebeständigen Zusatzelement (20), das sich im Einbauzustand in von den Befestigungsnuten (24) getrennte Aufnahmeräume (22) der Metallprofile (14, 16) erstreckt;
**dadurch gekennzeichnet, dass**
das mindestens eine hitzebeständige Zusatzelement so mit der Dämmleiste (18) verbunden ist, dass bei der Montage das Zusatzelement (20) und das Dämmelement (18) in einem Arbeitsgang einschiebbar sind.

2. Brandsichere Isolierstegverbindung nach Anspruch 1, **dadurch gekennzeichnet, daß**
das hitzebeständige Zusatzelement (20) aus Metall, insbesondere Stahl, Edelstahl oder Aluminium, oder Keramik oder Glas oder hitzebeständigem Kunststoff besteht.

3. Brandsichere Isolierstegverbindung nach Anspruch 1 oder 2,
**dadurch gekennzeichnet, daß**
das hitzebeständige Zusatzelement (20) Ausstanzungen (36a, 36b, 36c, 36d) aufweist.

4. Brandsichere Isolierstegverbindung nach einem oder mehreren der Ansprüche 1 bis 3,
**dadurch gekennzeichnet, daß**
im Einbauzustand keine unmittelbare Berührung zwischen dem hitzebeständigen Zusatzelement (20) und den Metallprofilen (14, 16) vorliegt.

5. Brandsichere Isolierstegverbindung nach einem oder mehreren der Ansprüche 1 bis 3,
**dadurch gekennzeichnet, daß**
das hitzebeständige Zusatzelement (20) im Einbauzustand mit mindestens einem der Metallprofile (16, 14) verschweißt (34) ist.

6. Brandsichere Isolierstegverbindung nach einem der Ansprüche 1 bis 5,
**dadurch gekennzeichnet, daß**
das hitzebeständige Zusatzelement (20) mit der Dämmleiste (18) verklebt ist.

7. Brandsichere Isolierstegverbindung nach einem der Ansprüche 1 bis 5,
**dadurch gekennzeichnet, daß**
das hitzebeständige Zusatzelement (20) in der Dämmleiste (18) eingeschmolzen ist.

8. Brandsichere Isolierstegverbindung nach einem der Ansprüche 1 bis 5,
**dadurch gekennzeichnet, daß**
das hitzebeständige Zusatzelement (20) in der Dämmleiste (18) eingeklipst ist.

9. Brandsichere Isolierstegverbindung nach einem der Ansprüche 1 bis 5,
**dadurch gekennzeichnet, daß**
das hitzebeständige Zusatzelement (20) in die Dämmleiste (18) eingeschoben ist.

10. Brandsichere Isolierstegverbindung nach Anspruch 1,
**dadurch gekennzeichnet, daß**
das Zusatzelement (20) aus einem hitzebeständigen Bauteil (40) sowie einem wärmeisolierenden Bauteil (42) besteht und das wärmeisolierenden Bauteil (42) einstückig mit der Wärmedämmleiste (18) ausgebildet ist.

## Claims

1. Fireproof insulating web connection for attaching between two metal profiles (14, 16), in particular for facades, windows and doors, with
- a damping strip (18) with low head conductance, which can be inserted by form-locking into fastening grooves (24) of the two metal profiles (12, 14) and
- at least one heat-resistant additional element (20) extending in the built-in state in receiver spaces (22) of the metal profiles (14, 16) separated from the fastening grooves (24),
**characterised in that**
the at least one heat-resistant additional element is connected to the damping strip (18) in such a way that during assembly the additional element (20) and the damping element (18) can be inserted in an operating corridor.

2. Fireproof insulating web connection according to claim 1, **characterised in that** the heat-resistant additional element (20) consists of metal, in particular steel, stainless steel or aluminium, or ceramics or glass or heat-resistant plastics material.

3. Fireproof insulating web connection according to claim 1 or 2, **characterised in that** the heat-resistant additional element (20) has stamped-out areas (36a, 36b, 36c, 36d).

4. Fireproof insulating web connection according to one or more of claims 1 to 3, **characterised in that** in the built-in state there is no direct contact between the heat-resistant additional element (20) and the metal profiles (14, 16).

5. Fireproof insulating web connection according to one or more of claims 1 to 3, **characterised in that** the heat-resistant additional element (20) in the built-in state is welded (34) to at least one of the metal profiles (16, 14).

6. Fireproof insulating web connection according to one of claims 1 to 5, **characterised in that** the heat-resistant additional element (20) is glued to the damping strip (18). melted into the damping strip (18).

7. Fireproof insulating web connection according to one of claims 1 to 5, **characterised in that** the heat-resistant additional element (20) is melted into the damping strip (18).

8. Fireproof insulating web connection according to one of claims 1 to 5, **characterised in that** the heat-resistant additional element (20) is clipped into the damping strip (18).

9. Fireproof insulating web connection according to one or of claims 1 to 5, **characterised in that** the heat-resistant additional element (20) is pushed into the damping strip (18).

10. Fireproof insulating web connection according to claim 1, **characterised in that** the additional element (20) consists of a heat-resistant component (40) and a heat-insulating component (42) and the heat-insulating component (42) is constructed in one piece with the heat-damping strip (18).

## Revendications

1. Connexion avec âme isolante, résistante au feu, pour le montage entre deux profilés métalliques (14, 16), en particulier pour des façades, des fenêtres et des portes, comprenant :
- une moulure isolante (18) à faible conductivité thermique, pouvant être insérée avec liaison à ajustement de forme dans des rainures de fixation (24) des deux profilés métalliques (12, 14) ; et
- au moins un élément additionnel (20) résistant à la chaleur, s'étendant, à l'état monté, dans des espaces de logement (22), séparés des rainures de fixation (24), des profilés métalliques (14, 16) ;
**caractérisée en ce que** ledit
au moins un élément additionnel résistant au feu est relié à la moulure isolante (18), de manière que, lors du montage, l'élément additionnel (20) et la moulure isolante (18) puissent être insérés en une seule passe opératoire.

2. Connexion avec âme isolante, résistante au feu, selon la revendication 1, **caractérisée en ce que** l'élément additionnel (20) résistant à la chaleur est formé de métal, en particulier d'acier, d'acier spécial ou d'aluminium, ou de céramique ou de verre, ou d'une matière synthétique résistant à la chaleur.

3. Connexion avec âme isolante, résistante au feu, selon la revendication 1 ou 2, **caractérisée en ce que** l'élément additionnel (20) résistant à la chaleur présente des découpures d'estampage (36a, 36b, 36c, 36d).

4. Connexion avec âme isolante, résistante au feu, selon l'une ou plusieurs des revendications 1 à 3, **caractérisée en ce qu'**à l'état monté aucun contact direct n'est établi, entre l'élément additionnel (20) résistant à la chaleur et les profilés métalliques (14, 16).

5. Connexion avec âme isolante, résistante au feu, selon l'une ou plusieurs des revendications 1 à 3, **caractérisée en ce que** l'élément additionnel (20) résistant à la chaleur, à l'état monté, est soudé (34) à au moins l'un des profilés métalliques (16, 14).

6. Connexion avec âme isolante, résistante au feu, selon l'une des revendications 1 à 5, **caractérisée en ce que** l'élément additionnel (20) résistant à la chaleur est collé à la moulure isolante (18).

7. Connexion avec âme isolante, résistante au feu, selon l'une des revendications 1 à 5, **caractérisée en ce que** l'élément additionnel (20) résistant à la chaleur est intégré par fusion dans la moulure isolante (18).

8. Connexion avec âme isolante, résistante au feu, selon l'une des revendications 1 à 5, **caractérisée en ce que** l'élément additionnel (20) résistant à la chaleur est intégré par enclipsage dans la moulure isolante (18).

9. Connexion avec âme isolante, résistante au feu, selon l'une des revendications 1 à 5, **caractérisée en ce que** l'élément additionnel (20) résistant à la chaleur est intégré par coulissement dans la moulure isolante (18).

10. Connexion avec âme isolante, résistante au feu, selon la revendication 1, **caractérisée en ce que** l'élément additionnel (20) est formé d'un composant (20) résistant à la chaleur, ainsi que d'un composant (42) isolant de la chaleur, et que le composant (42) isolant de la chaleur est réalisé d'une seule pièce avec la moulure d'isolation thermique (18).
